# EUROPEAN PATENT SPECIFICATION

(11) **EP 4 246 398 B1**
(45) Date of publication and mention of the grant of the patent: **30.10.2024**
(21) Application number: 23161795.2
(22) Date of filing: 14.03.2023
(51) Int. Cl.: G06Q 10/06, G06Q 10/04

(54) **INFORMATION PROCESSING SYSTEM AND INFORMATION PROCESSING METHOD**
INFORMATIONSVERARBEITUNGSSYSTEM UND INFORMATIONSVERARBEITUNGSVERFAHREN
SYSTÈME ET PROCÉDÉ DE TRAITEMENT D'INFORMATIONS

(30) Priority: 18.03.2022 JP 2022044087; 22.03.2022 JP 2022045111; 27.02.2023 JP 2023028191
(43) Date of publication of application: 20.09.2023
(73) Proprietor: Ricoh Company, Ltd., Tokyo 143-8555 (JP)
(72) Inventor: Itoh, Izumi, Tokyo, 143-8555 (JP); Nakamura, Shuuichi, Tokyo, 143-8555 (JP); Nagai, Ken, Tokyo, 143-8555 (JP); Oshikiri, Kohji, Tokyo, 143-8555 (JP)
(74) Representative: Marks & Clerk LLP

(56) References cited:
- JP-A- 2017 188 164
- US-A1- 2021 303 883
- US-B2- 11 017 544

## Description

### BACKGROUND

### Technical Field

Embodiments of the present disclosure relate to an information processing system and an information processing method.

### Related Art

Japanese Unexamined Patent Application Publication No. 2006-112127 describes a road condition management system that identifies, on the basis of latitude and longitude information of a location where damage has occurred, an identifier (ID) and a distance post of a road closest to the corresponding latitude and longitude and displays a mark indicating that damage has occurred on the corresponding road on a map accompanied with a value of the distance post.

US 11017544 B2 describes a system in which first image data of an object is detected and verified, and at a later point second image data of the same object is detected, with transmission of the second image data being based on whether the distance moved by the object in that time is above a threshold or not.

JP 2017-188164 A described an image acquisition system for inspecting the state of a road, including a terminal, and an image acquisition device which acquires an image from the terminal and performs analysis to determine a state of the road based on the image.

US 2021/0303883 A1 describes a deterioration diagnosis device which acquires sensing information and computes a priority ranking of inspection targets based on the same inspection target appearing in multiple captured images.

An object of the present invention is to appropriately analyze measurement information.

### SUMMARY

Aspects of the invention are presented in the appended claims.

According to an aspect of the present disclosure, measurement information is appropriately analyzed.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a schematic view of an overall configuration of a state inspection system, according to according to an embodiment of the present invention;
FIG. 2 is a block diagram illustrating an example of a hardware configuration of a data acquisition apparatus, according to an embodiment of the present invention;
FIG. 3 is a block diagram illustrating an example of a hardware configuration of each of a management apparatus and an analysis apparatus, according to an embodiment of the present invention;
FIG. 4 is a block diagram illustrating an example of a functional configuration of the state inspection system, according to an embodiment of the present invention;
FIG. 5 is a conceptual diagram illustrating an example of an analysis information management table, according to an embodiment of the present invention;
FIG. 6 is a sequence diagram illustrating an example of an operation of analyzing data, according to an embodiment of the present invention; and
FIG. 7 is a flowchart illustrating an example of an operation of updating measurement information, according to an embodiment of the present invention.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Embodiments of the present disclosure are described with reference to the drawings. In the description of the drawings, the same elements are denoted by the same reference numerals, and redundant descriptions thereof are omitted.

### Embodiments

### Overview of System

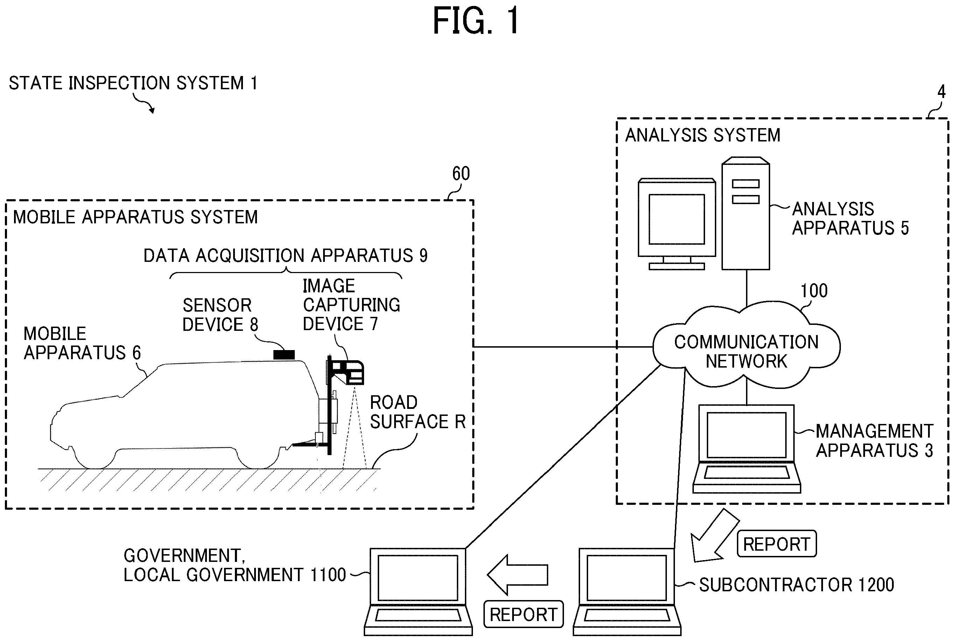

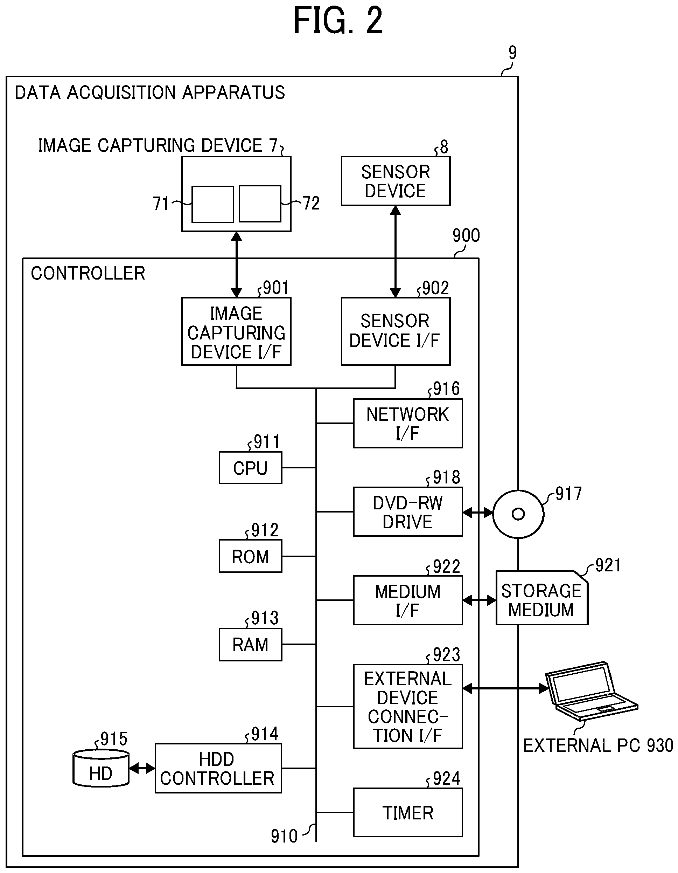

Referring to FIG. 1 and FIG. 2, an overview of a state inspection system 1 is described according to an embodiment. FIG. 1 is a schematic view illustrating an overall configuration of the state inspection system 1 according to an embodiment. The state inspection system 1 illustrated in FIG. 1 is an example of an information processing system. The state inspection system 1 measures and inspects properties such as a crack of a structure such as a road surface using various data acquired by a mobile apparatus system 60.

Examples of the structure include, but are not limited to, a sidewalk surface, a carriage way surface (road surface) on which vehicles travels, a railway on which trains travels, a slope, an inner surface of a tunnel, and a structure on a road. Examples of the structure on a road include, but are not limited to, a sign and a utility pole provided on a road edge. In the following description, a case of inspecting properties of a road surface on which a mobile apparatus 6 such as a vehicle travels is described. The state inspection system 1 is used, for example, for a case of inspecting a surface property of a structure that extends in one direction on a section-by-section basis, each section having a certain distance.

The state inspection system 1 includes the mobile apparatus system 60, an analysis system 4, a communication terminal 1100 of a national government or a local government, and a communication terminal 1200 of a subcontractor. The mobile apparatus system 60 is an example of an image-capturing system. The mobile apparatus system 60 includes a data acquisition apparatus 9 and a mobile apparatus 6 such as a vehicle. The data acquisition apparatus 9 is mounted on the mobile apparatus 6. The data acquisition apparatus 9 is an example of a measurement apparatus. The data acquisition apparatus 9 includes an image capturing device 7 and a global navigation satellite system (GNSS) sensor. The image capturing device 7 is an example of a measuring device that measures a structure. GNSS is a term that collectively refers to satellite positioning systems such as a global positioning system (GPS) or quasi-zenith satellite (QZSS). The GNSS sensor is an example of a sensor device 8. The mobile apparatus system 60 photographs a structure such as a road surface while the mobile apparatus 6 travels.

The image capturing device 7 is provided, for example, at a rear portion of a roof of the mobile apparatus 6 so as to face in a direction opposite to the traveling direction of the mobile apparatus, and photographs a road surface R behind the mobile apparatus 6. In another example, the image capturing device 7 is provided, for example, at a front portion of the roof of the mobile apparatus 6 so as to face in the same direction as the traveling direction of the mobile apparatus. In another example, the image capturing device 7 is provided on a side portion of the roof of the mobile apparatus 6 so as to face in a direction perpendicular (or substantially perpendicular) to the traveling direction of the mobile apparatus. In another example, the image capturing device 7 is provided near the number plate in front of the mobile apparatus 6.

The image capturing device 7 is a stereo camera that photographs a predetermined range of the road surface R. The stereo camera is, for example, a camera for obtaining depth information of unevenness or the like formed on the road surface R to be analyzed by using parallax information of two cameras arranged side by side. The stereo camera repeatedly performs photographing at a timing at which parts of images overlap with each other in the traveling direction of the mobile apparatus 6. It is preferable that only one stereo camera is installed in consideration of mounting on the mobile apparatus 6. In order to deal with a road having a wide road surface width, multiple stereo cameras may be installed so as to photograph the entire road surface R in the width direction, and the multiple stereo cameras may concurrently perform photographing so that parts of images overlap in the width direction. In this case, the multiple stereo cameras are aligned in a row so that they face the road surface R obliquely downward.

The mobile apparatus 6 is, for example, a dedicated vehicle. In another example, the mobile apparatus 6 is a general-purpose vehicle such as a parcel delivery vehicle. The general-purpose vehicle installed with the image capturing device 7 implements photographing while traveling and measurement of data capable of outputting a crack, rutting, flatness, and International Roughness Index (IRI) without the cost that is required when using the dedicated vehicle. In a case that a single stereo camera is used, the stereo camera can be easily mounted when the mobile apparatus 6 is a general-purpose vehicle.

The analysis system 4 includes a management apparatus 3 and an analysis apparatus 5. The management apparatus 3 and the analysis apparatus 5 of the analysis system 4 are communicably connected to the mobile apparatus system 60, the communication terminal 1100, and the communication terminal 1200 through a communication network 100. The communication network 100 includes the Internet, a mobile communication network, and a local area network (LAN), for example.

The communication network 100 includes a network by not only wired communications but also a network by wireless communications such as 3rd generation (3G), 4th generation (4G), 5th generation (5G), Wireless Fidelity (Wi-Fi^{®}), Worldwide Interoperability for Microwave Access (WiMAX), or Long Term Evolution (LTE).

Further, the management apparatus 3 and the analysis apparatus 5 may have communication capability using a short-range communication technology such as near field communication (NFC^{®}).

The analysis apparatus 5 is an example of an information processing apparatus. The analysis apparatus 5 is a computer such as a personal computer (PC) that analyzes various data acquired by the data acquisition apparatus 9. The analysis apparatus 5 is installed with a dedicated application program for analyzing a state of the road surface. In another example, the transfer of the various acquired data from the analysis apparatus 5 to the management apparatus 3 is performed manually, for example, using a universal serial bus (USB) memory.

The management apparatus 3 is a computer such as a PC that manages various analysis information transferred from the analysis apparatus 5. Further, the management apparatus 3 generates a report using captured image data, sensor data, analysis information, and detailed analysis result. The report is to be submitted to an entity that manages roads such as a national government, a local government, or a subcontractor. Data of the report generated by the management apparatus 3 is submitted to the national government or the local governments via the subcontractor in the form of electronic data or printed documents. The report generated by the management apparatus 3 is referred to as a "survey record sheet", a "check list", a "survey profile", or "records", for example. The PC is merely one example of the management apparatus 3. Alternatively, a smartphone, a tablet terminal, or the like may be used for the management apparatus 3. In another example, the management apparatus 3 and the analysis apparatus 5 of the analysis system 4 are constructed as a single apparatus or terminal.

The communication terminal 1200 is provided in the subcontractor. The communication terminal 1100 is provided in the national government or the local government. The management apparatus 3, the communication terminal 1100, and the communication terminal 1200 are examples of terminal apparatuses communicably connected to the analysis apparatus 5. Various data managed by the analysis apparatus 5 can be viewed at the management apparatus 3, the communication terminal 1100, and the communication terminal 1200.

### Hardware Configuration

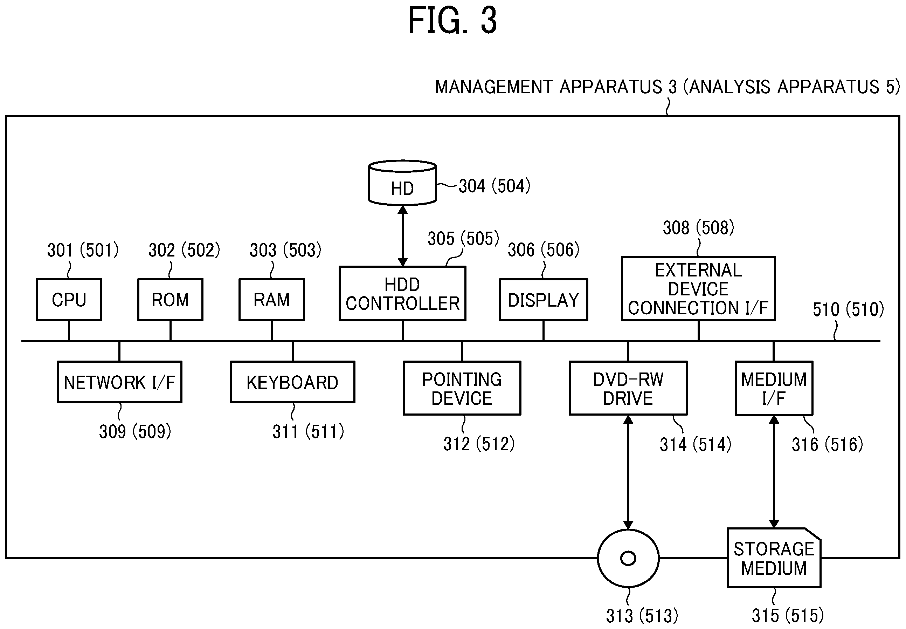

Referring to FIG. 2 and FIG. 3, a hardware configuration of each of the apparatuses of the state inspection system 1 is described. In the hardware configurations illustrated in FIG. 2 and FIG. 3, components or elements may be added or deleted as needed.

### Hardware Configuration of Data Acquisition Apparatus

FIG. 2 is a block diagram illustrating an example of a hardware configuration of the data acquisition apparatus 9. The data acquisition apparatus 9 includes the image capturing device 7 and the sensor device 8 as illustrated in FIG. 1, and a controller 900 that controls processing or operation of the data acquisition apparatus 9.

The image capturing device 7 includes a first camera 71 and a second camera 72. The image capturing device 7 provides captured image data of the road surface R photographed by the first camera 71 and the second camera 72 to the controller 900.

Specifically, the image capturing device 7 provides brightness image data captured by each of the first camera 71 and the second camera 72 and parallax image data indicating parallax information by the first camera 71 and the second camera 72 to the controller 900.

Imaging processing by the first camera 71 and the second camera 72 of the image capturing device 7 is controlled by the controller 900. For example, the controller 900 configures settings of various parameters including exposure positions of the first camera 71 and the second camera 72, instructs the start and end of photographing, and records a captured image. The image capturing device 7 is preferably a single stereo camera including the first camera 71 and the second camera 72. In another example, the image capturing device 7 includes two or more stereo cameras.

The controller 900 includes an image capturing device interface (I/F) 901, a sensor device I/F 902, a bus line 910, a central processing unit (CPU) 911, a read only memory (ROM) 912, a random access memory (RAM) 913, a hard disk (HD) 914, a hard disk drive (HDD) controller 915, a network I/F 916, a digital versatile disk rewritable (DVD-RW) drive 918, a medium I/F 922, an external device connection I/F 923, and a timer 924.

The image capturing device I/F 901 is an interface through which the controller 900 transmits and receives various data or information to and from the image capturing device 7. The sensor device I/F 902 is an interface through which the controller 900 transmits and receives various data or information to and from the sensor device 8. Examples of the bus line 910 include, but are not limited to, an address bus and a data bus that electrically connects the components illustrated in FIG. 2 such as the CPU 911.

The CPU 911 controls overall operation of the data acquisition apparatus 9. The ROM 912 stores a program such as an initial program loader (IPL) to boot the CPU 911. The RAM 913 is used as a work area for the CPU 911. The HD 914 stores various data such as programs. The HDD controller 915 controls reading or writing of various data to or from the HD 914 under control of the CPU 911. The network I/F 916 is an interface that controls communication of data with an external device through the communication network 100.

The DVD-RW drive 918 controls reading or writing of various data to or from a DVD-RW 917, which is an example of a removable storage medium. In another example, the removable storage medium includes at least one of digital versatile disk-recordable (DVD-R) or a Blu-ray^{®} disc, in addition to or in alternative to the DVD-RW.

The medium I/F 922 controls reading or writing (storing) of data from or to a storage medium 921 such as a flash memory. The external device connection I/F 923 is an interface that connects the data acquisition apparatus 9 to an external PC 930 including a display, an operation receiving device, and a display controller. The timer 924 is a measurement device that has a time measurement function. The timer 924 may be a computer-based software timer.

### Hardware Configuration of Management Apparatus

FIG. 3 is a block diagram illustrating an example of a hardware configuration of the management apparatus 3. Hardware elements of the management apparatus 3 are given reference numerals in 300 series. As illustrated in FIG. 3, the management apparatus 3 is implemented by a computer. Specifically, the management apparatus 3 includes a CPU 301, a ROM 302, a RAM 303, an HD 304, an HDD controller 305, a display 306, an external device connection I/F 308, a network I/F 309, a bus line 310, a keyboard 311, a pointing device 312, a DVD-RW drive 314, and a medium I/F 316.

The CPU 301 controls overall operation of the management apparatus 3. The ROM 302 stores a program such as an IPL to boot the CPU 301. The RAM 303 is used as a work area for the CPU 301. The HD 304 stores various data such as programs. The HDD controller 305 controls reading or writing of various data to or from the HD 304 under control of the CPU 301. The display 306 displays various information such as a cursor, a menu, a window, characters, or an image. The display 306 is an example of a display unit.

The external device connection I/F 308 is an interface that connects the management apparatus 3 to various external devices. Examples of the external devices include, but are not limited to, a USB memory and a printer. The network I/F 309 is an interface that controls communication of data with an external device through the communication network 100. Examples of the bus line 310 include, but are not limited to, an address bus and a data bus that electrically connects the components illustrated in FIG. 3 such as the CPU 301.

The keyboard 311 is an example of input means (an input device) including a plurality of keys for inputting characters, numerical values, various instructions, and the like. The pointing device 312 is an example of input means (an input device ) that allows a user to select or execute a specific instruction, select an object for processing, or move a cursor being displayed. The DVD-RW drive 314 controls reading or writing of various data to or from a DVD-RW 313, which is an example of a removable storage medium. In another example, the removable storage medium includes at least one of DVD-R or a Blu-ray^{®} disc, in addition to or in alternative to the DVD-RW. The medium I/F 316 controls reading or writing (storing) of data from or to a storage medium 315 such as a flash memory.

### Hardware Configuration of Analysis Apparatus

FIG. 3 is a block diagram illustrating an example of a hardware configuration of the analysis apparatus 5. Hardware elements of the analysis apparatus 5 are given reference numerals in 500 series. As illustrated in FIG. 3, the analysis apparatus 5 is implemented by a computer. As illustrated in FIG. 3, since the analysis apparatus 5 has the same configuration as the management apparatus 3, the description of the hardware configuration thereof is omitted below. Further, since each of the communication terminal 1100 and the communication terminal 1200 is also implemented by a computer and has the same or substantially the same configuration as that of the management apparatus 3, the description of the hardware configuration thereof is omitted below.

For example, each of the above-described programs is recorded in a file in a format installable or executable on a computer-readable storage medium for distribution. Examples of the storage medium include a compact disc recordable (CD-R), a DVD, a Blu-ray^{®} disc, a secure digital (SD) card, and a USB memory. In addition, such storage medium may be provided in the domestic markets of foreign markets as program products. For example, the analysis system 4 according to an embodiment executes the program according to the present disclosure to implement an evaluation method according to the present disclosure.

### Functional Configuration

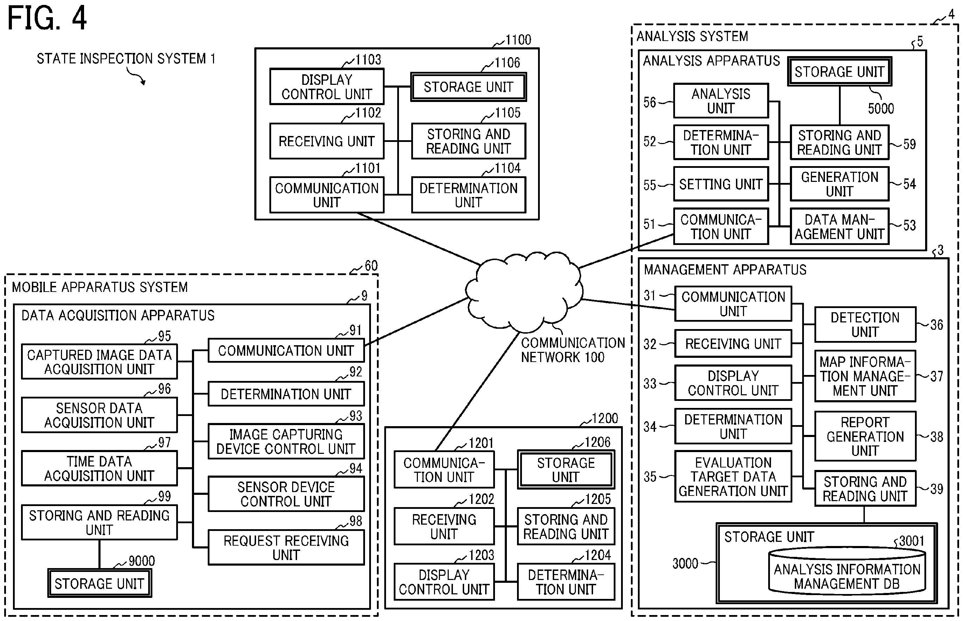

FIG. 4 is a block diagram illustrating an example of a functional configuration of the state inspection system 1, according to the first embodiment. FIG. 4 illustrates a part of the apparatuses or terminals of FIG. 1, which are related to processes or operations described below.

### Functional Configuration of Data Acquisition Apparatus

First, an example of a functional configuration of the data acquisition apparatus 9 is described. The data acquisition apparatus 9 includes a communication unit 91, a determination unit 92, an image capturing device control unit 93, a sensor device control unit 94, a captured image data acquisition unit 95, a sensor data acquisition unit 96, a time data acquisition unit 97, a request receiving unit 98, and a storing and reading unit 99.

These units are functions or means implemented by or caused to function by operating one or more hardware components illustrated in FIG. 2 in cooperation with instructions of the CPU 911 according to the program for the data acquisition apparatus loaded from the HD 914 to the RAM 913. The data acquisition apparatus 9 further includes a storage unit 9000 implemented by the ROM 912 and the HD 914 illustrated in FIG. 2. The external PC 930 illustrated in FIG. 2 connected to the data acquisition apparatus 9 includes a receiving unit and a display control unit.

The communication unit 91 is mainly implemented by the network I/F 916 that operates according to instructions of the CPU 911. The communication unit 91 communicates various data or information with other apparatuses or terminals through the communication network 100. For example, the communication unit 91 transmits acquired data acquired by the captured image data acquisition unit 95 and the sensor data acquisition unit 96 to the analysis apparatus 5. The communication unit 91 is an example of transmitting means and receiving means. The determination unit 92, which is implemented by instructions of the CPU 911, performs various determinations.

The image capturing device control unit 93 is mainly implemented by the image capturing device I/F 901 that operates according to instructions of the CPU 911. The image capturing device control unit 93 control photographing processing by the image capturing device 7. The sensor device control unit 94 is mainly implemented by the sensor device I/F 902 that operates according to instructions of the CPU 911. The sensor device control unit 94 controls data acquisition processing for the sensor device 8.

The captured image data acquisition unit 95 is mainly implemented by the image capturing device I/F 901 that operates according to instructions of the CPU 911. The captured image data acquisition unit 95 acquires brightness image data and parallax image data from the image capturing device 7. The captured image data acquisition unit 95 can acquire, for example, an image required to form a stereo image of the road surface R in the road width direction in response to, for example, one photographing trigger from the image capturing device control unit 93.

The sensor data acquisition unit 96 is mainly implemented by the sensor device I/F 902 that operates according to instructions of the CPU 911. The sensor data acquisition unit 96 acquires sensor data, which is a result of detection by the sensor device 8. The sensor data acquisition unit 96 is an example of a distance information acquisition unit and a location information acquisition unit. The time data acquisition unit 97 is mainly implemented by the timer 924 that operates according to instructions of the CPU 911. The time data acquisition unit 97 acquires time data that indicates a time at which the captured image data acquisition unit 95 or the sensor data acquisition unit 96 acquires data.

The request receiving unit 98 is mainly implemented by the external device connection I/F 923 that operates according to instructions of the CPU 911. The request receiving unit 98 receives a request from, for example, the external PC 930.

The storing and reading unit 99, which is implemented mainly by instructions of the CPU 911, stores various data (or information) in the storage unit 9000 or reads various types of data (or information) from the storage unit 9000.

### Functional Configuration of Management Apparatus

Next, a functional configuration of the management apparatus 3 is described. The management apparatus 3 includes a communication unit 31, a receiving unit 32, a display control unit 33, a determination unit 34, an evaluation target data generation unit 35, a detection unit 36, a map data management unit 37, a report generation unit 38, and a storing and reading unit 39. These units are functions or means implemented by or caused to function by operating one or more hardware components illustrated in FIG. 3 in cooperation with instructions of the CPU 301 according to the program for the management apparatus 3 loaded from the HD 304 to the RAM 303. The management apparatus 3 further includes a storage unit 3000 implemented by the ROM 302 and the HD 304 illustrated in FIG. 3.

The communication unit 31 is mainly implemented by the network I/F 309 that operates according to instructions of the CPU 301. The communication unit 31 communicates various data or information with other apparatuses or terminals through the communication network 100. For example, the communication unit 31 transmits and receives various data relating to analysis of a road surface state to and from the analysis apparatus 5. The communication unit 31 is an example of transmitting means and receiving means.

The receiving unit 32 is mainly implemented by the keyboard 311 or the pointing device 312 that operates according to instructions of the CPU 301. The receiving unit 32 receives various selections or inputs from a user. The receiving unit 32 receives various selections or inputs to the display 306. The display control unit 33, which is mainly implemented by the instructions of the CPU 301, controls the display 306 to display various images. The determination unit 34, which is implemented by instructions of the CPU 301, performs various determinations. The receiving unit 32 is an example of operation receiving means.

The evaluation target data generation unit 35, which is implemented by instructions of the CPU 301, generates data to be evaluated. In the following description, the data to be evaluated may be referred to "evaluation target data." The detection unit 36, which is mainly implemented by instructions of the CPU 301, performs processing of detecting a state of the road surface using the evaluation target data generated by the evaluation target data generation unit 35. The map data management unit 37, which is mainly implemented by instructions of the CPU 301, manages map information acquired from, for example, an external server. The map information includes location information at a certain position on a map.

The report generation unit 38, which is mainly implemented by instructions of the CPU 301, generates an evaluation report to be submitted to the entity in charge of roads based on the evaluation result.

The storing and reading unit 39 is implemented mainly by processing of the CPU 301 and stores various types of data or information in the storage unit 3000 or reads out various types of data or information from the storage unit 3000. The storing and reading unit 39 is an example of updating means.

### Functional Configuration of Analysis Apparatus

Next, a functional configuration of the analysis apparatus 5 is described. The analysis apparatus 5 includes a communication unit 51, a determination unit 52, a data management unit 53, a generation unit 54, a setting unit 55, an analysis unit 56, and a storing and reading unit 59. These units are functions or means implemented by or caused to function by operating one or more hardware components illustrated in FIG. 3 in cooperation with instructions of the CPU 501 according to the program for the analysis apparatus loaded from the HD 504 to the RAM 503. The analysis apparatus 5 further includes a storage unit 5000 implemented by the ROM 502 and the HD 504 illustrated in FIG. 3.

The communication unit 51 is mainly implemented by the network I/F 509 that operates according to instructions of the CPU 501. The communication unit 51 communicates various data or information with other apparatuses or terminals through the communication network 100. For example, the communication unit 51 receives captured image data and sensor data transmitted from the data acquisition apparatus 9. Further, the communication unit 51 transmits and receives various data to and from the management apparatus 3, for example. The communication unit 51 is an example of transmitting means and receiving means. The determination unit 52, which is implemented by instructions of the CPU 501, performs various determinations. The determination unit 52 is an example of position generation means.

The data management unit 53, which is mainly implemented by instructions of the CPU 501, manages various data relating to the evaluation of a road surface state. For example, the data management unit 53 registers the captured image data and the sensor data transmitted from the data acquisition apparatus 9 in acquired data management database (DB) 5001. Further, the data management unit 53 registers, for example, data processed or generated by the management apparatus 3 in a processed data management DB 5003. The generation unit 54, which is mainly implemented by instructions of the CPU 501, generates image data relating to a road surface.

The generation unit 54, which is implemented by instructions of the CPU 301, performs various types of generation. The setting unit 55, which is implemented by instructions of the CPU 301, configures various settings. The analysis unit 56, which is implemented by instructions of the CPU 301, performs various types of analysis.

The storing and reading unit 59, which is implemented mainly by instructions of the CPU 501, stores various data (or information) in the storage unit 5000 or reads various types of data (or information) from the storage unit 5000.

### Functional Configuration of Communication Terminal

Next, a functional configuration of the communication terminal 1100 is described. The communication terminal 1100 includes a communication unit 1101, a receiving unit 1102, a display control unit 1103, a determination unit 1104, and a storing and reading unit 1105. These units are functions or means implemented by or caused to function by operating one or more hardware components illustrated in FIG. 3 in cooperation with instructions of the CPU according to the program for the communication terminal loaded from the HD to the RAM. The communication terminal 1100 further includes a storage unit 1106 implemented by the ROM and the HD illustrated in FIG. 3.

The communication unit 1101 is mainly implemented by the network I/F that operates according to instructions of the CPU. The communication unit 1101 communicates various data or information with other apparatuses or terminals through the communication network 100. The communication unit 1101 is an example of transmitting means and receiving means.

The receiving unit 1102 is mainly implemented by the keyboard or the pointing device that operates according to instructions of the CPU. The receiving unit 1102 receives various selections or inputs from a user. The display control unit 1103, which is mainly implemented by the instructions of the CPU, controls the display to display various images. The determination unit 1104, which is implemented by instructions of the CPU 301, performs various determinations. The receiving unit 1102 is an example of operation receiving means.

The storing and reading unit 1105, which is implemented mainly by instructions of the CPU, stores various data (or information) in the storage unit 1106 or reads various types of data (or information) from the storage unit 1106.

Next, a functional configuration of the communication terminal 1200 is described. The communication terminal 1200 includes a communication unit 1201, a receiving unit 1202, a display control unit 1203, a determination unit 1204, and a storing and reading unit 1205. These units are functions or means implemented by or caused to function by operating one or more hardware components illustrated in FIG. 3 in cooperation with instructions of the CPU according to the program for the communication terminal loaded from the HD to the RAM. The communication terminal 1200 further includes a storage unit 1206 implemented by the ROM and the HD illustrated in FIG. 3.

The communication unit 1201 is mainly implemented by the network I/F that operates according to instructions of the CPU. The communication unit 1201 communicates various data or information with other apparatuses or terminals through the communication network 100.

The receiving unit 1202 is mainly implemented by the keyboard or the pointing device that operates according to instructions of the CPU. The receiving unit 1202 receives various selections or inputs from a user. The display control unit 1203, which is mainly implemented by the instructions of the CPU, controls the display to display various images. The determination unit 1204, which is implemented by instructions of the CPU 301, performs various determinations.

The storing and reading unit 1205, which is implemented mainly by instructions of the CPU, stores various data (or information) in the storage unit 1206 or reads various types of data (or information) from the storage unit 1206.

### Analysis Information Management Table

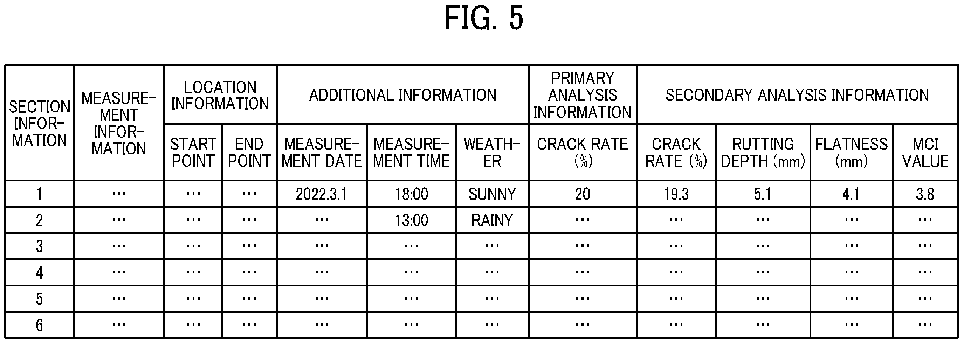

FIG. 5 is a conceptual diagram illustrating an example of an analysis information management table. The analysis information management table is a table for managing primary analysis information and secondary analysis information obtained by analyzing measurement information. In the storage unit 3000, an analysis information management DB 3001 is stored, for example, in the form of an analysis information management table as illustrated in FIG. 5. In the analysis information management table, measurement information, location information, additional information, the primary analysis information, and the secondary analysis information are managed in association with each other for each section information.

The measurement information includes the brightness image data captured by each of the first camera 71 and the second camera 72 of the image capturing device 7 and the parallax image data indicating parallax information by the first camera 71 and the second camera 72.

The location information includes location information of a start point and location information of an end point between which the measurement information is acquired. The additional information includes a measurement date and a measurement time when the measurement information is measured, and weather at the corresponding time.

The primary analysis information is numerical information indicating cracks or the like analyzed by, for example, artificial intelligence (AI) analysis without human intervention. The secondary analysis information is obtained by manual analysis in addition to the automatic analysis. The secondary analysis information is different from the primary analysis information in that higher accuracy is achieved by manual operation or inclusion of more detailed information, and that the number of analysis items is larger than the primary analysis information. Examples of the inclusion of the detailed information include that a crack rate in the primary analysis is output on the basis of the counted number of cracks, whereas in the secondary analysis, the crack rate is output using not only the information on the counted number of cracks but also information on a counted area of patching (partial repair tracks) according to the handbook of test methods. Examples of the analysis items include, but are not limited to the crack rate, rutting depth, flatness, IRI, and Maintenance Control Index (MCI).

### Processes or Operation of Embodiment

### Operation of Acquiring Data

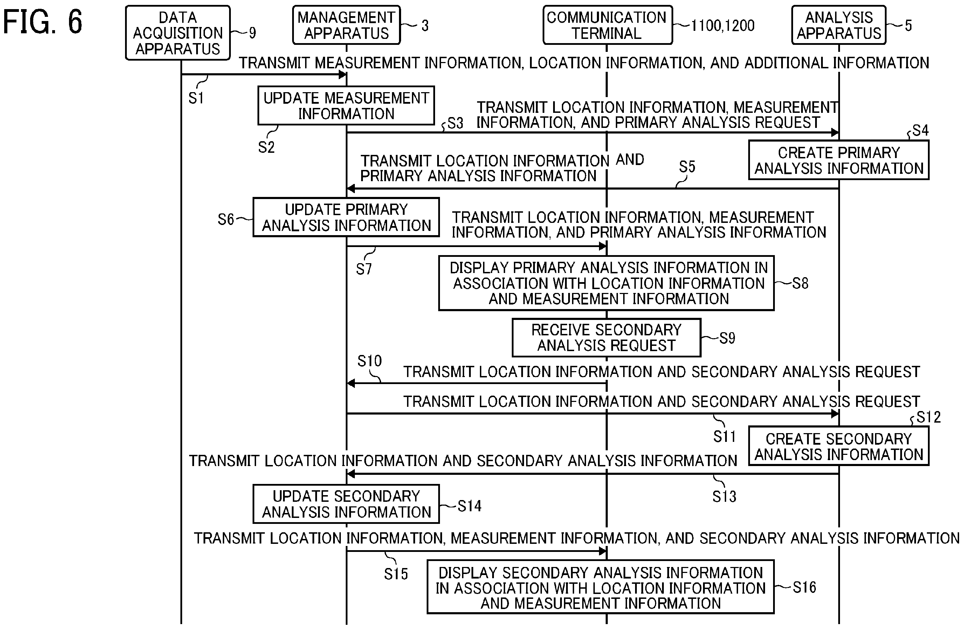

FIG. 6 is a sequence diagram illustrating an example of an operation of analyzing data.

In the following, in regard to operations performed by the communication terminal 1100 and the communication terminal 1200, an operation by the communication terminal 1100 is described. The communication terminal 1200 performs the same or substantially the same operation as described with reference the communication terminal 1100.

The communication unit 91 of the data acquisition apparatus 9 transmits, to the management apparatus 3, the measurement information, the location information, and the additional information, which are associated with each other (step S1). The communication unit 31 of the management apparatus 3 receives these information items. Step S1 is an example of a receiving step.

When location information and measurement information corresponding to the location information and the measurement information received in step S1 are not stored in the analysis information management DB 3001, the storing and reading unit 39 stores the measurement information received in step S1 in association with the location information and the additional information received in step S1 in the analysis information management DB 3001.

When location information and measurement information corresponding to the location information and the measurement information received in step S1 are already stored in the analysis information management DB 3001 and satisfies a predetermined condition, the storing and reading unit 39 stores the measurement information received in step S1 in association with the location information and the additional information received in step S1 in the analysis information management DB 3001 to update the stored information (step S2).

The communication unit 31 transmits the measurement information stored or updated in step S2 to the analysis apparatus 5 in association with the location information and a primary analysis request, and the communication unit 51 of the analysis apparatus 5 receives these information items (step S3).

The analysis unit 56 performs primary analysis on the measurement information received in step S3 according to the primary analysis request received in step S3, to store primary analysis information in the storage unit 5000 in association with the location information and the measurement information (step S4).

The communication unit 51 transmits the primary analysis information obtained by analyzing the measurement information in step S4 to the management apparatus 3 in association with the location information received in step S3, and the communication unit 31 of the management apparatus 3 receives these information items (step S5).

When location information and primary analysis information corresponding to the location information and the primary analysis information received in step S5 are not stored in the analysis information management DB 3001, the storing and reading unit 39 stores the primary analysis information received in step S5 in the analysis information management DB 3001 in association with the location information received in step S5.

When location information and primary analysis information corresponding to the location information and the primary analysis information received in step S5 are already stored in the analysis information management DB 3001, the storing and reading unit 39 stores the primary analysis information received in step S5 in the analysis information management DB 3001 in association with the location information received in step S5 to update the stored information (step S6). Step S6 is an example of a storing step and an updating step.

The communication unit 31 transmits the primary analysis information stored or updated in step S6 to the communication terminal 1100 in association with the location information and the measurement information, and the communication unit 1101 of the communication terminal 1100 receives these information items (step S7).

The display control unit 1203 controls the display to display the primary analysis information received in step S7 in association with the location information and the measurement information (step S8). The receiving unit 1102 receives a secondary analysis request with respect to the primary analysis information displayed in step S8 (step S9). Step S8 is an example of a displaying step. Step S9 is an example of an accepting step.

The display control unit 1203 may display the primary analysis information and the measurement information at a position corresponding to the location information on a map displayed on the display. The display control unit 1203 may display the updated primary analysis information and the updated measurement information in a manner that they are distinguished from other primary analysis information and measurement information.

The communication unit 1101 transmits the secondary analysis request received in step S9 to the management apparatus 3 in association with the location information, and the communication unit 31 of the management apparatus 3 receives these information items (step S 10). Step S10 is an example of a receiving step.

The communication unit 31 transmits the secondary analysis request and the location information received in step S10 to the analysis apparatus 5, and the communication unit 51 of the analysis apparatus 5 receives these information items (step S11).

According to the secondary analysis request and the location information received in step S11, the analysis unit 56 performs secondary analysis on the measurement information stored in the storage unit 5000 in association with the location information in step S4, to store secondary analysis information in the storage unit 5000 in association with the location information and the measurement information (step S12).

The communication unit 51 transmits the secondary analysis information obtained by analyzing the measurement information in step S12 to the management apparatus 3 in association with the location information received in step S11, and the communication unit 31 of the management apparatus 3 receives these information items (step S13).

When location information and secondary analysis information corresponding to the location information and the secondary analysis information received in step S13 are not stored in the analysis information management DB 3001, the storing and reading unit 39 stores the secondary analysis information received in step S13 in the analysis information management DB 3001 in association with the location information received in step S13.

When location information and secondary analysis information corresponding to the location information and the secondary analysis information received in step S13 are already stored in the analysis information management DB 3001, the storing and reading unit 39 stores the secondary analysis information received in step S13 in the analysis information management DB 3001 in association with the location information received in step S13 to update the stored information (step S14).

The communication unit 31 transmits the secondary analysis information stored or updated in step S14 to the communication terminal 1100 in association with the location information and the measurement information, and the communication unit 1101 of the communication terminal 1100 receives these information items (step S15).

The display control unit 1203 displays the secondary analysis information received in step S15 on the display in association with the location information and the measurement information (step S16).

The display control unit 1203 may display the secondary analysis information and the measurement information at a position corresponding to the location information on a map displayed on the display. The display control unit 1203 may display the updated secondary analysis information in a manner that it is distinguished from other secondary analysis information.

Although the description given above is of an example in which the analysis apparatus 5 and the management apparatus 3 are separately provided, in another example, the analysis apparatus and the management apparatus are provided as a single entity. In this case, the processes of steps S3, S5, S11, and S13 relating to transmission and reception are omitted, and the processes of steps S4 and S12 are performed by the analysis unit by an analysis unit of the management apparatus 3.

In another example, the communication terminal 1100 or the communication terminal 1200 and the management apparatus 3 are provided as a single entity. In this case, the processes of steps S7, S10, and S15 relating to transmission and reception are omitted, the processes of steps S8 and S16 are performed by the display control unit 33, and the process of step S9 is performed by the receiving unit 32.

As described above, the management apparatus 3 manages the primary analysis information obtained by analyzing the measurement information obtained by measuring the road surface R according to no analysis request and the secondary analysis information obtained by analyzing the measurement information on the basis of the primary analysis information according to an analysis request. Accordingly, compared to the case of measuring the road surface R after receiving an analysis request, analysis information can be obtained timely. Further, compared to the case of analyzing the road surface in advance with the final quality before receiving an analysis request, analysis information can be obtained efficiently for measurement information for which analysis information is required.

In particular, in a case that a general-purpose vehicle such as a parcel delivery vehicle is used as the mobile apparatus 6, the road surface R can be easily measured before receiving an analysis request without the cost of a dedicated vehicle. Accordingly, compared to a case of analyzing with the final quality, the primary analysis information can be easily obtained by using AI or the like or analyzing simple contents.

Thus, a user can appropriately determine whether to make an analysis request on the basis of the updated primary analysis information, compared to a case that the user determines whether to make an analysis request on the basis of the primary analysis information which is not updated.

In other words, even when whether to make an analysis request cannot be determined on the basis of old primary analysis information, whether to make an analysis request is determined on the basis of updated primary analysis information.

Further, the management apparatus 3 transmits the updated primary analysis information, and therefore the user can check the updated primary analysis information received by the communication terminal 1100 and the communication terminal 1200 and appropriately determine whether to give an analysis request. Thus, the management apparatus 3 can receive an appropriate analysis request based on the updated primary analysis information.

Further, the display control unit 33 displays the primary analysis information on the display 306, and thus the user can appropriately determine whether to make an analysis request.

In other words, it is difficult for a user to determine whether to make an analysis request by simply checking the measurement information unless the user is a very skilled person. The configuration described above allows a user to appropriately determine whether to make the analysis request by checking the primary analysis information obtained by simply analyzing the measurement information.

The display control unit 33 controls the display 306 to display the measurement information and the primary analysis information in association with each other, thus the user can more appropriately determine whether to make an analysis request.

Further, the display control unit 33 controls the display 306 to display the updated primary analysis information, and therefore a user can check the updated primary analysis information and appropriately determine whether to make an analysis request. Thus, the receiving unit 32 can receive an appropriate analysis request based on the updated primary analysis information.

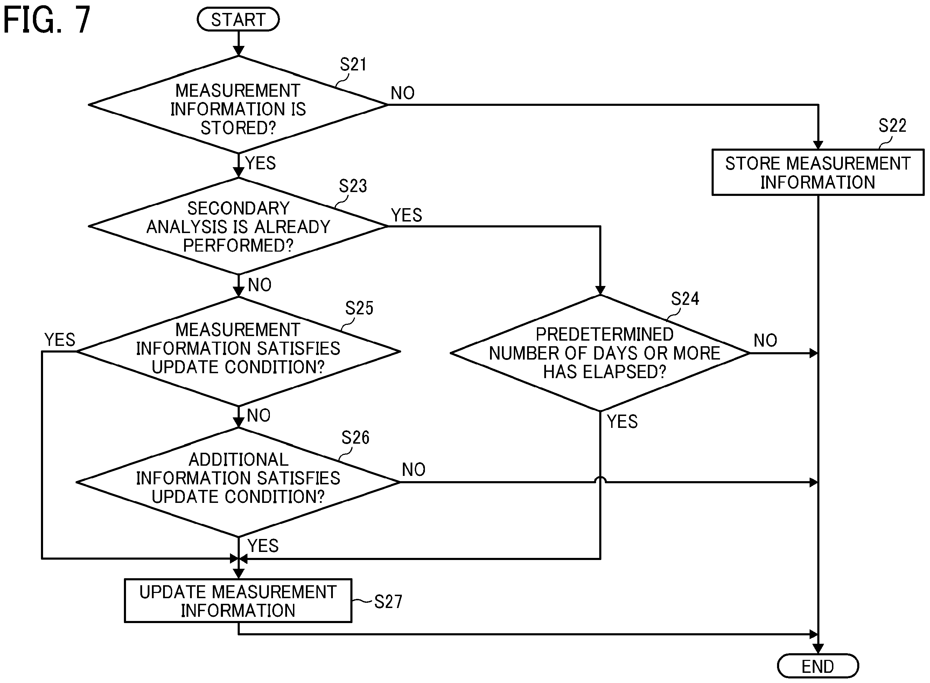

FIG. 7 is a flowchart illustrating an example of an operation of updating measurement information. FIG. 7 illustrates specific processing corresponding to step S2 of FIG. 6.

When the determination unit 34 determines that location information and measurement information corresponding to the location information and the measurement information received in step S1 are not stored in the analysis information management DB 3001 (step S21: No), the storing and reading unit 39 stores the measurement information received in step S1 in association with the location information and the additional information received in step S1 in the analysis information management DB 3001 (step S22).

By contrast, when the determination unit 34 determines that location information and measurement information corresponding to the received location information and the received measurement information are already stored in the analysis information management DB 3001 (step S21: Yes), the determination unit 34 determines whether secondary analysis information associated with the location information received in step S1 is stored in the analysis information management DB 3001 (step S23).

As a result, new measurement information is stored or existing measurement information is updated according to a location of the road surface R. Thus, new primary analysis information is stored or existing primary analysis information is updated according to a location of the road surface R.

When the determination unit 34 determines that the secondary analysis information is already stored in the analysis information management DB 3001 (step S23: Yes), the determination unit 34 determines whether a measurement date of the measurement information received in step S1 has passed by a predetermined number of days or more with respect to a measurement date of the measurement information corresponding to the secondary analysis information stored in the analysis information management DB 3001 (step S24).

When the determination unit 34 determines that the predetermined number of days or more has not passed (step S24: No), the operation ends. When the determination unit 34 determines that the predetermined number of days or more has passed (step S24: Yes), the storing and reading unit 39 stores the measurement information received in step S1 in the analysis information management DB 3001 in association with the location information and the additional information received in step S1 to update the already stored measurement information (step S27).

As a result, in a case that the measurement date of the measurement information received in step S1 has not passed by a predetermined number of days or more with respect to the measurement date of the measurement information corresponding to the already stored secondary analysis information, the possibility that the road surface R has deteriorated over time is considered to be low and the measurement information is not updated. Thus, unnecessary analysis of the primary analysis information and the update are avoided.

By contrast, in a case that the measurement date of the measurement information received in step S1 has passed by a predetermined number of days or more with respect to the measurement date of the measurement information corresponding to the already stored secondary analysis information, the possibility that the road surface R has deteriorated is considered to be high, and the measurement information is updated. Thus, the deterioration of the road surface over time is checked from the primary analysis information.

When the measurement information is updated in step S27, the primary analysis information is also updated as described with respect to steps S2 to S6 of FIG. 6.

When the determination unit 34 determines that the secondary analysis information is not stored in the analysis information management DB 3001 (step S23: No), the determination unit 34 determines whether the measurement information received in step S1 satisfies a predetermined update condition (step S25).

When the determination unit 34 determines that the measurement information satisfies the update condition (step S25: Yes), the operation proceeds to step S27. The storing and reading unit 39 stores the measurement information received in step S1 in association with the location information and the additional information received in step S1 in the analysis information management DB 3001, to update the measurement information.

As a result, when the received additional information satisfies the predetermined update condition, the measurement information is updated and thereby the primary analysis information is analyzed and updated.

Specifically, in a case that a measurement time of the measurement information received in step S1 is a daytime while a measurement time of the measurement information already stored is evening, the update condition is determined to be satisfied on the assumption that the measurement accuracy is higher in the daytime.

Further, in a case that the weather at the time of measurement of the measurement information received in step S1 is fine while the weather at the time of measurement of the already stored measurement information is rainy, the update condition is determined to be satisfied on the assumption that the measurement accuracy is better in fine weather.

In other words, by updating to accurate measurement information, accurate primary analysis information is analyzed.

By contrast, when the determination unit 34 determines that the measurement information does not satisfy the update condition (step S25: No), the determination unit 34 determines whether the additional information received in step S1 satisfies a predetermined update condition (step S26).

When the determination unit 34 determines that the additional information satisfies the update condition (step S26: Yes), the operation proceeds to step S27. The storing and reading unit 39 stores the measurement information received in step S1 in the analysis information management DB 3001 in association with the location information and the additional information received in step S1 to update the measurement information. When the determination unit 34 determines that the additional information does not satisfy the update condition (step S26: No), the operation ends.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An information processing system (1) comprising:
a management apparatus (3); and
a terminal apparatus (1100, 1200) communicably connected to the management apparatus (3),
an analysis apparatus (5) communicably connected to the management apparatus,
the analysis apparatus (5) including:
a communication unit (51) for communicating with the management apparatus
an analysis unit (56) for obtaining primary and secondary analysis information by analyzing measurement information;
wherein primary analysis information is numerical information indicating measured and inspected properties, and is obtained by analyzing the measurement information without being based on a manual request for analysis, and secondary analysis information is obtained by manual analysis in addition to automatic analysis;
the management apparatus (3) including:
a communication unit (31) for communicating with the analysis apparatus and the terminal apparatus
a storage control means (39) for controlling a storage means (3001) to store primary analysis information received from the analysis apparatus (5);
wherein the management apparatus is configured to:
request, upon receiving measurement information obtained by measuring the object, the analysis apparatus to perform primary analysis on the measurement information obtained by measuring the object;
transmit, upon receiving the primary analysis information from the analysis apparatus, the primary analysis information to the terminal apparatus (1100, 1200); and
receive, from the terminal apparatus (1100, 1200), an analysis request that requests secondary analysis information of the measurement information corresponding to the primary analysis information,
transmit the analysis request that requests secondary analysis information to the analysis apparatus;
receive the secondary analysis information from the analysis apparatus the terminal apparatus (1100, 1200) including:
a primary analysis information receiving means (1101, 1201) for receiving the primary analysis information from the management apparatus (3);
a display control means (1103, 1203) for controlling a display unit to display the primary analysis information received by the primary analysis information receiving means (1101, 1201);
an analysis request accepting means (1102, 1202) for accepting the analysis request; and
an analysis request transmitting means (1101, 1201) for transmitting the analysis request to the management apparatus (3).

2. The information processing system (1) of claim 1, wherein the display control means (1103, 1203) is further configured to control the display unit to display the secondary analysis information obtained by analyzing the measurement information according to the analysis request.

3. The information processing system (1) of claim 1 or 2, wherein the display control means (1103, 1203) is further configured to control the display unit to display location information indicating a location where the object corresponding to the primary analysis information is measured.

4. The information processing system (1) of claim 3, wherein the display control means (1103, 1203) is further configured to control the display unit to display map information in association with the location information.

5. The information processing system (1) of claim 1, wherein the management apparatus is further configured to transmit the secondary analysis information to the terminal apparatus (1100, 1200).

6. The information processing system (1) of claim 5, wherein the management apparatus is further configured to transmit location information indicating a location where the object corresponding to the primary analysis information is measured to the terminal apparatus (1100, 1200).

7. The information processing system (1) of claim 1, wherein
the management apparatus (3) is configured to manage the primary analysis information and the secondary analysis information, and
the management apparatus (3) includes:
a measurement information receiving means (31) for receiving the measurement information transmitted by a measurement apparatus (9); and
an updating means (34) for updating the primary analysis information based on the measurement information received by the measurement information receiving means (31).

8. The information processing system (1) of claim 7, wherein the updating means (34) is configured to update the primary analysis information based on an elapsed time from a time when the measurement information is measured in the past to a time when the measurement information is measured.

9. The information processing system (1) of claim 7 or 8, wherein the updating means (34) is configured to omit updating the primary analysis information in a case that the secondary analysis information corresponding to the measurement information received by the measurement information receiving means (31) is already analyzed.

10. The information processing system (1) of any one of claims 7 to 9, wherein the updating means (34) is configured to update the primary analysis information in a case that the measurement information received by the measurement information receiving means (31) satisfies a predetermined update condition.

11. The information processing system (1) of any one of claims 7 to 10, wherein
the measurement information receiving means (31) is configured to receive additional information that is transmitted by the measurement apparatus (9) in association with the measurement information, and
the updating means (34) is configured to update the primary analysis information based on the additional information.

12. The information processing system (1) of any one of claims 7 to 11, wherein
the measurement information receiving means (31) is configured to receive location information indicating a location of the object, the location information being transmitted by the measurement apparatus (9) in association with the measurement information, and
the updating means (34) is configured to update the primary analysis information based on the location information.

13. An information processing method performed by an information processing system including a management apparatus, a terminal apparatus communicably connected to the management apparatus, and an analysis apparatus communicably connected to the management apparatus, the information processing method comprising:
by the management apparatus:
transmitting (S3) to the analysis apparatus, upon receiving measurement information obtained by measuring the object, a request to perform primary analysis on the measurement information obtained by measuring the object;
controlling (S6) storage means to store primary analysis information obtained by analyzing measurement information without being based on a request for an analysis, the measurement information being obtained by measuring an object;
transmitting (S7) the primary analysis information to the terminal apparatus;
receiving (S10), from the terminal apparatus, an analysis request that requests secondary analysis information of the measurement information corresponding to the primary analysis information,
transmitting (S11) the analysis request that requests secondary analysis information to the analysis apparatus; and
receiving (S13) the secondary analysis information from the analysis apparatus;
by the analysis apparatus:
receiving (S3), from the management apparatus, the request to perform primary analysis;
performing (S4) the primary analysis to create primary analysis information; and
transmitting (S5) the primary analysis information to the management apparatus;
by the terminal apparatus:
receiving (S7) the primary analysis information from the management apparatus;
controlling (S8) a display unit to display the received primary analysis information;
receiving (S9) the analysis request from a user; and
transmitting (S10) the analysis request to the management apparatus.

## Patentansprüche

1. Informationsverarbeitungssystem (1), umfassend:
eine Verwaltungseinrichtung (3); und
eine Endstelleneinrichtung (1100, 1200), die mit der Verwaltungseinrichtung (3) kommunikationsfähig verbunden ist,
eine Analyseeinrichtung (5), die mit der Verwaltungseinrichtung kommunikationsfähig verbunden ist,
wobei die Analyseeinrichtung (5) einschließt:
eine Kommunikationseinheit (51) zum Kommunizieren mit der Verwaltungseinrichtung;
eine Analyseeinheit (56) zum Erlangen von primären und sekundären Analyseinformationen durch Analysieren von Messungsinformationen;
wobei primäre Analyseinformationen numerische Informationen sind, die gemessene und inspizierte Eigenschaften angeben, und durch Analysieren der Messungsinformationen erlangt werden, ohne auf einer manuellen Anforderung zur Analyse zu beruhen, und sekundäre Analyseinformationen durch manuelle Analyse zusätzlich zu automatischer Analyse erlangt werden;
wobei die Verwaltungseinrichtung (3) einschließt:
eine Kommunikationseinheit (31) zum Kommunizieren mit der Analyseeinrichtung und der Endstelleneinrichtung;
ein Speichersteuerungsmittel (39) zum Steuern eines Speichermittels (3001), um von der Analyseeinrichtung (5) empfangene primäre Analyseinformationen zu speichern;
wobei die Verwaltungseinrichtung dafür konfiguriert ist:
bei Empfang von durch Messen des Objekts erlangten Messungsinformationen anzufordern, dass die Analyseeinrichtung eine primäre Analyse der durch Messen des Objekts erlangten Messungsinformationen durchführt;
bei Empfang der primären Analyseinformationen von der Analyseeinrichtung die primären Analyseinformationen zu der Endstelleneinrichtung (1100, 1200) zu übertragen; und
von der Endstelleneinrichtung (1100, 1200) eine Analyseanforderung zu empfangen, die sekundäre Analyseinformationen der Messungsinformationen entsprechend den primären Analyseinformationen anfordert,
die Analyseanforderung, die sekundäre Analyseinformationen anfordert, zu der Analyseeinrichtung zu übertragen;
die sekundären Analyseinformationen von der Analyseeinrichtung zu empfangen; wobei die Endstelleneinrichtung (1100, 1200) einschließt:
ein Empfangsmittel für primäre Analyseinformationen (1101, 1201) zum Empfangen der primären Analyseinformationen von der Verwaltungseinrichtung (3);
ein Anzeigesteuerungsmittel (1103, 1203) zum Steuern einer Anzeigeeinheit, um die primären Analyseinformationen anzuzeigen, die durch das Empfangsmittel für primäre Analyseinformationen (1101, 1201) empfangen wurden;
ein Analyseanforderung-Entgegennahmemittel (1102, 1202) zum Entgegennehmen der Analyseanforderung; und
ein Analyseanforderung-Übertragungsmittel (1101, 1201) zum Übertragen der Analyseanforderung zu der Verwaltungseinrichtung (3).

2. Informationsverarbeitungssystem (1) nach Anspruch 1, wobei das Anzeigesteuerungsmittel (1103, 1203) ferner dafür konfiguriert ist, die Anzeigeeinheit so zu steuern, dass sie die durch Analysieren der Messungsinformationen gemäß der Analyseanforderung erlangten sekundären Analyseinformationen anzeigt.

3. Informationsverarbeitungssystem (1) nach Anspruch 1 oder 2, wobei die Anzeigesteuerungseinheit (1103, 1203) ferner dafür konfiguriert ist, die Anzeigeeinheit so zu steuern, dass sie Ortsinformationen anzeigt, die einen Ort angeben, an dem das Objekt, das den primären Analyseinformationen entspricht, gemessen wird.

4. Informationsverarbeitungssystem (1) nach Anspruch 3, wobei das Anzeigesteuerungsmittel (1103, 1203) ferner dafür konfiguriert ist, die Anzeigeeinheit so zu steuern, dass sie Karteninformationen in Verbindung mit den Ortsinformationen anzeigt.

5. Informationsverarbeitungssystem (1) nach Anspruch 1, wobei die Verwaltungseinrichtung ferner dafür konfiguriert ist, die sekundären Analyseinformationen zu der Endstelleneinrichtung (1100, 1200) zu übertragen.

6. Informationsverarbeitungssystem (1) nach Anspruch 5, wobei die Verwaltungseinrichtung ferner dafür konfiguriert ist, Ortsinformationen, die einen Ort angeben, an dem das Objekt, das den primären Analyseinformationen entspricht, gemessen wird, zu der Endstelleneinrichtung (1100, 1200) zu übertragen.

7. Informationsverarbeitungssystem (1) nach Anspruch 1, wobei:
die Verwaltungseinrichtung (3) dafür konfiguriert ist, die primären Analyseinformationen und die sekundären Analyseinformationen zu verwalten, und
die Verwaltungseinrichtung (3) einschließt:
ein Messungsinformationen-Empfangsmittel (31) zum Empfangen der Messungsinformationen, die durch eine Messeinrichtung (9) übertragen werden; und
ein Aktualisierungsmittel (34) zum Aktualisieren der primären Analyseinformationen auf der Grundlage der Messungsinformationen, die durch das Messungsinformationen-Empfangsmittel (31) empfangen werden.

8. Informationsverarbeitungssystem (1) nach Anspruch 7, wobei das Aktualisierungsmittel (34) dafür konfiguriert ist, die primären Analyseinformationen auf der Grundlage einer verstrichenen Zeit von einem Zeitpunkt, zu dem die Messungsinformationen in der Vergangenheit gemessen wurden, bis zu einem Zeitpunkt, zu dem die Messungsinformationen gemessen werden, zu aktualisieren.

9. Informationsverarbeitungssystem (1) nach Anspruch 7 oder 8, wobei das Aktualisierungsmittel (34) dafür konfiguriert ist, das Aktualisieren der primären Analyseinformationen in einem Fall auszulassen, in dem die sekundären Analyseinformationen, die den durch das Messungsinformationen-Empfangsmittel (31) empfangenen Messungsinformationen entsprechen, bereits analysiert sind.

10. Informationsverarbeitungssystem (1) nach einem der Ansprüche 7 bis 9, wobei das Aktualisierungsmittel (34) dafür konfiguriert ist, die primären Analyseinformationen in einem Fall zu aktualisieren, in dem die Messungsinformationen, die durch das Messungsinformationen-Empfangsmittel (31) empfangen werden, eine vorbestimmte Aktualisierungsbedingung erfüllen.

11. Informationsverarbeitungssystem (1) nach einem der Ansprüche 7 bis 10, wobei:
das Messungsinformationen-Empfangsmittel (31) dafür konfiguriert ist, zusätzliche Informationen zu empfangen, die durch die Messeinrichtung (9) in Verbindung mit den Messungsinformationen übertragen werden, und
das Aktualisierungsmittel (34) dafür konfiguriert ist, die primären Analyseinformationen auf der Grundlage der zusätzlichen Informationen zu aktualisieren.

12. Informationsverarbeitungssystem (1) gemäß einem der Ansprüche 7 bis 11, wobei:
das Messungsinformationen-Empfangsmittel (31) dafür konfiguriert ist, Ortsinformationen zu empfangen, die einen Ort des Objekts angeben, wobei die Ortsinformationen durch die Messeinrichtung (9) in Verbindung mit den Messungsinformationen übertragen werden, und
das Aktualisierungsmittel (34) dafür konfiguriert ist, die primären Analyseinformationen auf der Grundlage der Ortsinformationen zu aktualisieren.

13. Informationsverarbeitungsverfahren, das durch ein Informationsverarbeitungssystem durchgeführt wird, das eine Verwaltungseinrichtung, eine mit der Verwaltungseinrichtung kommunizierend verbundene Endstelleneinrichtung und eine mit der Verwaltungseinrichtung kommunizierend verbundene Analyseeinrichtung einschließt, wobei das Informationsverarbeitungsverfahren umfasst:
durch die Verwaltungseinrichtung:
bei Empfang von durch Messen des Objekts erlangten Messungsinformationen erfolgendes Übertragen (S3) einer Anforderung, eine primäre Analyse der durch Messen des Objekts erlangten Messungsinformationen durchzuführen, zu der Analyseeinrichtung;
Steuern (S6) eines Speichermittels, um primäre Analyseinformationen zu speichern, die durch Analysieren von Messungsinformationen erlangt werden, ohne auf einer Anforderung einer Analyse zu beruhen, wobei die Messungsinformationen durch Messen eines Objekts erlangt werden;
Übertragen (S7) der primären Analyseinformationen zu der Endstelleneinrichtung;
Empfangen (S10) einer Analyseanforderung von der Endstelleneinrichtung, die sekundäre Analyseinformationen der Messungsinformationen entsprechend den primären Analyseinformationen anfordert,
Übertragen (S 11) der Analyseanforderung, die sekundäre Analyseinformationen anfordert, zu der Analyseeinrichtung; und
Empfangen (S13) der sekundären Analyseinformationen von der Analyseeinrichtung;
durch die Analyseeinrichtung:
Empfangen (S3) der Anforderung, eine primäre Analyse durchzuführen, von der Verwaltungseinrichtung;
Durchführen (S4) der primären Analyse, um primäre Analyseinformationen zu erzeugen; und
Übertragen (S5) der primären Analyseinformationen zu der Verwaltungseinrichtung;
durch die Endstelleneinrichtung:
Empfangen (S7) der primären Analyseinformationen von der Verwaltungseinrichtung;
Steuern (S8) einer Anzeigeeinheit, um die empfangenen primäre Analyseinformationen anzuzeigen;
Empfangen (S9) der Analyseanforderung von einem Benutzer; und
Übertragen (S 10) der Analyseanforderung zu der Verwaltungseinrichtung.

## Revendications

1. Système de traitement d'informations (1) comprenant :
un appareil de gestion (3) ; et
un appareil terminal (1100, 1200) connecté de manière communicante à l'appareil de gestion (3),
un appareil d'analyse (5) connecté de manière communicante à l'appareil de gestion,
l'appareil d'analyse (5) incluant :
une unité de communication (51) pour communiquer avec l'appareil de gestion ;
une unité d'analyse (56) pour obtenir des informations d'analyse primaire et secondaire en analysant des informations de mesure ;
dans lequel des informations d'analyse primaire sont des informations numériques indiquant des propriétés mesurées et inspectées, et sont obtenues en analysant les informations de mesure sans être basées sur une demande manuelle d'analyse, et des informations d'analyse secondaire sont obtenues par analyse manuelle en plus d'une analyse automatique ;
l'appareil de mesure (3) incluant :
une unité de communication (31) pour communiquer avec l'appareil d'analyse et l'appareil terminal ;
un moyen de commande de stockage (39) pour commander un moyen de stockage (3001) pour stocker des informations d'analyse primaire reçues en provenance de l'appareil d'analyse (5) ;
dans lequel l'appareil de gestion est configuré pour :
demander, dès réception d'informations de mesure obtenues en mesurant l'objet, à l'appareil d'analyse de réaliser une analyse primaire des informations de mesure obtenues en mesurant l'objet ;
transmettre, dès réception des informations d'analyse primaire en provenance de l'appareil d'analyse, les informations d'analyse primaire à l'appareil terminal (1100, 1200) ; et
recevoir, en provenance de l'appareil terminal (1100, 1200), une demande d'analyse qui demande des informations d'analyse secondaire des informations de mesure correspondant aux informations d'analyse primaire,
transmettre la demande d'analyse qui demande des informations d'analyse secondaire à l'appareil d'analyse ;
recevoir les informations d'analyse secondaire en provenance de l'appareil d'analyse, l'appareil terminal (1100, 1200) incluant :
un moyen de réception d'informations d'analyse primaire (1101, 1201) pour recevoir les informations d'analyse primaire en provenance de l'appareil de gestion (3) ;
un moyen de commande d'affichage (1103, 1203) pour commander une unité d'affichage pour afficher les informations d'analyse primaire reçues par le moyen de réception d'informations d'analyse primaire (1101, 1201) ;
un moyen d'acceptation de demande d'analyse (1102, 1202) pour accepter la demande d'analyse ; et
un moyen de transmission de demande d'analyse (1101, 1201) pour transmettre la demande d'analyse à l'appareil de gestion (3).

2. Système de traitement d'informations (1) selon la revendication 1, dans lequel le moyen de commande d'affichage (1103, 1203) est en outre configuré pour commander l'unité d'affichage pour afficher les informations d'analyse secondaire obtenues en analysant les informations de mesure conformément à la demande d'analyse.

3. Système de traitement d'informations (1) selon la revendication 1 ou 2, dans lequel le moyen de commande d'affichage (1103, 1203) est en outre configuré pour commander l'unité d'affichage pour afficher des informations d'emplacement indiquant un emplacement où l'objet correspondant aux informations d'analyse primaire est mesuré.

4. Système de traitement d'informations (1) selon la revendication 3, dans lequel le moyen de commande d'affichage (1103, 1203) est en outre configuré pour commander l'unité d'affichage pour afficher des informations de carte en association avec les informations d'emplacement.

5. Système de traitement d'informations (1) selon la revendication 1, dans lequel l'appareil de gestion est en outre configuré pour transmettre les informations d'analyse secondaire à l'appareil terminal (1100, 1200).

6. Système de traitement d'informations (1) selon la revendication 5, dans lequel l'appareil de gestion est en outre configuré pour transmettre, à l'appareil terminal (1100, 1200), des informations d'emplacement indiquant un emplacement où l'objet correspondant aux informations d'analyse primaire est mesuré.

7. Système de traitement d'informations (1) selon la revendication 1, dans lequel
l'appareil de gestion (3) est configuré pour gérer les informations d'analyse primaire et les informations d'analyse secondaire, et
l'appareil de gestion (3) inclut :
un moyen de réception d'informations de mesure (31) pour recevoir les informations de mesure transmises par un appareil de mesure (9) ; et
un moyen de mise à jour (34) pour mettre à jour les informations d'analyse primaire sur la base des informations de mesure reçues par le moyen de réception d'informations de mesure (31).

8. Système de traitement d'informations (1) selon la revendication 7, dans lequel le moyen de mise à jour (34) est configuré pour mettre à jour les informations d'analyse primaire sur la base d'un temps écoulé à partir d'une heure où les informations de mesure sont mesurées dans le passé jusqu'à une heure où les informations de mesure sont mesurées.

9. Système de traitement d'informations (1) selon la revendication 7 ou 8, dans lequel le moyen de mise à jour (34) est configuré pour omettre de mettre à jour les informations d'analyse primaire dans un cas où les informations d'analyse secondaire correspondant aux informations de mesure reçues par le moyen de réception d'informations de mesure (31) sont déjà analysées.

10. Système de traitement d'informations (1) selon l'une quelconque des revendications 7 à 9, dans lequel le moyen de mise à jour (34) est configuré pour mettre à jour les informations d'analyse primaire dans un cas où les informations de mesure reçues par le moyen de réception d'informations de mesure (31) remplissent une condition de mise à jour prédéterminée.

11. Système de traitement d'informations (1) selon l'une quelconque des revendications 7 à 10, dans lequel
le moyen de réception d'informations de mesure (31) est configuré pour recevoir des informations additionnelles qui sont transmises par l'appareil de mesure (9) en association avec les informations de mesure, et
le moyen de mise à jour (34) est configuré pour mettre à jour les informations d'analyse primaire sur la base des informations additionnelles.

12. Système de traitement d'informations (1) selon l'une quelconque des revendications 7 à 11, dans lequel
le moyen de réception d'informations de mesure (31) est configuré pour recevoir des informations d'emplacement indiquant un emplacement de l'objet, les informations d'emplacement étant transmises par l'appareil de mesure (9) en association avec les informations de mesure, et
le moyen de mise à jour (34) est configuré pour mettre à jour les informations d'analyse primaire sur la base des informations d'emplacement.

13. Procédé de traitement d'informations réalisé par un système de traitement d'informations incluant un appareil de gestion, un appareil terminal connecté de manière communicante à l'appareil de gestion et un appareil d'analyse connecté de manière communicante à l'appareil de gestion, le procédé de traitement d'informations comprenant :
par l'appareil de gestion :
la transmission (S3), à l'appareil d'analyse, dès réception d'informations de mesure obtenues en mesurant l'objet, d'une demande de réalisation d'analyse primaire des informations de mesure obtenues en mesurant l'objet ;
la commande (S6) d'un moyen de stockage pour stocker des informations d'analyse primaire obtenues en analysant des informations de mesure sans se baser sur une demande d'analyse, les informations de mesure étant obtenues en mesurant un objet ;
la transmission (S7) des informations d'analyse primaire à l'appareil terminal ;
la réception (S10), en provenance de l'appareil terminal, d'une demande d'analyse qui demande des informations d'analyse secondaire des informations de mesure correspondant aux informations d'analyse primaire,
la transmission (S11) de la demande d'analyse qui demande des informations d'analyse secondaire à l'appareil d'analyse ; et
la réception (S13) des informations d'analyse secondaire en provenance de l'appareil d'analyse ;
par l'appareil d'analyse :
la réception (S3), en provenance de l'appareil de gestion, de la demande visant à réaliser une analyse primaire ;
la réalisation (S4) de l'analyse primaire pour créer des informations d'analyse primaire ; et
la transmission (S5) des informations d'analyse primaire à l'appareil de gestion ;
par l'appareil terminal :
la réception (S7) des informations d'analyse primaire en provenance de l'appareil de gestion ;
la commande (S8) d'une unité d'affichage pour afficher les informations d'analyse primaire reçues ;
la réception (S9) de la demande d'analyse en provenance d'un utilisateur ; et
la transmission (S10) de la demande d'analyse à l'appareil de gestion.
